# EUROPEAN PATENT APPLICATION

(11) **EP 1 088 620 A1**
(43) Date of publication of application: **04.04.2001**
(21) Application number: 99922528.7
(22) Date of filing: 27.05.1999
(51) Int. Cl.: B23Q 15/00, G05B 19/4097, A61C 5/10, A61C 13/00

(54) **METHOD AND DEVICE FOR MACHINING PROSTHETIC APPLIANCE AND PROSTHETIC BLOCK**

(30) Priority: 28.05.1998 JP 16427298; 10.12.1998 JP 35167298; 09.04.1999 JP 10328999
(71) Applicant: KABUSHIKI KAISYA ADVANCE, Chuo-ku Tokyo 103-0024 (JP)
(72) Inventor: MASUGI, Kazuhide, Koshigaya-shi, Saitama 343-0023 (JP); SUGAI, Yasuhisa, Fuchu-shi Tokyo 183-0012 (JP); USUDA, Masahiko, Matsudo-shi Chiba 270-2253 (JP); HAMADA, Hiroaki, Urawa-shi Saitama 338-0816 (JP); HAMAIE, Tadashi, Narashino-shi Chiba 275-0015 (JP)
(74) Representative: Sanderson, Michael John
(86) International application number: JP9902808
(87) International publication number: WO9961202

(57) **Abstract**

In an apparatus for measuring the shape of an article to be copied and machining the copy from a block on the basis of data obtained by the measurement, machining time is reduced while a tool used for machining is effectively utilized and its consumption is restricted. To this end a machining method that profiles a work using a side surface portion of a tool to an object shape or a shape approximate to the object shape is proposed. The shape of a portion from which a prosthesis is to be produced is acquired by measuring a surface shape of a mold or an impression from inside an oral cavity or a mold, and a dental prosthesis is produced. The work includes a support portion that can be machined.

## Description

### TECHNICAL FIELD

The present invention relates to an apparatus for conducting automatic measurement and automatic machining on the basis of the measurement information, using computer control. The present invention also relates to a system for measuring and producing precise dental prostheses, other dental materials, medical materials, various imitations and works having shapes that are the same as, are analogous to, or correspond to that of a measured object, using automatic measurement and automatic machining means represented by a CAD/CAM machine. The present invention relates further to a block for a dental prosthesis that is used in such a system.

### BACKGROUND ART

When a block is machined using a CAD/CAM apparatus or an NC machine tool, there are a rough machining step and a finish machining step. In the former step a block having a certain size is roughly machined to a shape approximate to an object shape. At this time, a large cutting or grinding tool is used. In the latter step the block after being rough machined is machined to the object shape. The machining method for conducting these steps has been conducted sequentially by cutting or grinding the block from an upper surface toward a lower part. This method intensively uses only a distal end portion of the cutting or grinding tool such as an end mill or a diamond bar.

In the case of ordinary NC machine tools and CAD/CAM machines, an article to be measured and a workpiece are disposed separately, or a measuring equipment and a machining machine separately conduct their respective operations.

When a dental prosthesis is produced, an anchor tooth is first impressed and a gypsum model of the anchor tooth is then produced. The shape of the dental prosthesis is built up by putting a wax to the model, and metal casting is conducted to obtain the intended prosthesis. A large number of man-hours and steps are necessary during this process, and the quality is likely to deviate from the optimum.

Research and development has been done to produce a dental prostheses (particularly, a crown) by an NC machine tool and to put this method into practical application. A production process for the dental prostheses includes the steps of producing a model of a dental prosthesis using a wax and a resin, faithfully measuring the shape, cutting or grinding the model by the NC machine tool, and finishing the model to the prosthesis. A system exists in which a picture of a tooth after the formation of a cavity is taken by a camera and a three-dimensional shape is formed in gray-scale and the system conducts cutting, though it is only directed to an inlay.

When cutting or grinding a rectangular or cylindrical block in the conventional method, the cutting or grinding tool cuts the block sequentially from the upper surface toward the lower part, so only the distal end portion of the cutting or grinding tool such as an end mill or a diamond bar is used and damage of the tool is extensive. Therefore, life of the tool is shortened. The portion of the cutting edge or the diamond grind stone other than the distal end portion remains unused.

Since the cutting is carried out by one part of tool, the cutting needs considerable time.

Since the article to be measured and the work are separately disposed from one another, there is a problem that the measurement data deviates from the work unless the position of the article to be measured is correctly reproduced. Particularly when a three-dimensional shape is reproduced, there is a case where the article to be measured and the work are rotated, which poses a problem of positioning the rotated members, and the problem is further complicated. To eliminate these problems, it is necessary to correctly measure the position of the article and to correctly position the work, with a great deal of labor and time. When measurement and machining are conducted in a common working area, contamination resulting from machining adversely affects the measurement.

In the dental field, the production of dental prostheses has been conducted almost fully by hand and automation has not developed. Recently, development of a CAD/CAM machine for dental use has begun. However, since the machining is the application of the method described above, a problem remains unsolved in that the time required is extremely long and the running cost is extremely high. In addition, it is necessary to produce very precisely a model for the three-dimensional shape measurement using a wax and a resin. In other words, if the three-dimensional shape measurement model is not satisfactory, the dental prosthesis proves unsatisfactory. In order to produce a dental prosthesis having a correct margin line and high adaptability, in particular, a high level of technique is necessary even when the dental CAD/CAM machine and a casting process are employed, and a great deal of time and labor are necessary. The supply of articles with stable quality is still another problem. In the case of gray-scale images, accuracy and resolution of the cameras does not meet accuracy of the dental prostheses at present. All these factors have caused a delay in automation and mechanization in the dental field.

### SUMMARY OF THE INVENTION

It is an object of the present invention to provide a method and an apparatus which can solve the problems described above and can also accurately produce a dental prosthesis within a short time.

The present invention makes it possible to effectively use an edge of a diamond whetstone or a circular cylindrical portion (side surface portion) of a cutting or grinding tool such as an end mill and a diamond bar, besides the distal end portion thereof.

In this method, first in an X-Y plane, a cutting or grinding tool is brought near a block from outside of the block and conducts rough machining using a circular cylindrical portion of the tool (side surface portion of the tool) to shape a profile. Next, the block is rotated by 90° about the X axis, and similarly conducts rough machining of the profile in an X-Z plane. Finish machining is conducted similarly.

Depending on the object shape, however, finish machining is made in the X-Y plane and after the work is inverted by 180° about the X axis, finish machining is then conducted similarly.

This method makes it possible to machine the entire portion of the outer shape corresponding to projection of the shape to be machined in the X-Y plane, using the circular cylindrical portion of the cutting or grinding tool. If machining similarly becomes possible in the X-Z plane after rotation by 90° about the X axis, the intended shape can be obtained by this process step alone depending on the object shape.

If finish machining is applied to the block toward the object shape after rough machining by the method described above, the distal end portion of the tool is used mainly in the finishing state. Therefore, rough machining and finish machining can be conducted continuously without exchanging tools.

As a work area for measurement and a work area for machining can be divided, measurement can be conducted in a clean area. As to positioning of a measurement object and a work, the problem can be solved by disposing them coaxially. The accuracy of their axes of rotation, a particular problem, can be solved when they are disposed on the same axis.

As to the preparation of three-dimensional shape data for cutting and grinding, an anchor tooth gypsum model produced from a dental impression is utilized.

The necessary portions of the anchor tooth gypsum model are extracted in the same way as at present. The gingiva side below a margin line is so trimmed as to overhang in the Z axis direction so that the margin line of the anchor tooth model of the extracted portion becomes easily visible.

A three-dimensional shape measurement model is produced from the trimmed anchor tooth gypsum model in match with sizes and shapes of adjacent teeth and a counter tooth is produced from the most projecting portion to the occlusal surface using a wax or a spontaneous polymerization resin.

As to the zone ranging from the most swelling portion to the margin line, a model is produced appropriately in such a manner as to overhang at the most swelling portion, or is not produced. Thereafter, the anchor tooth gypsum model and the measurement model equipped with the anchor tooth gypsum model are measured using a three-dimensional shape measuring instrument.

The overhang portion of the data obtained by the measurement is omitted from the data. The data omission method includes a method that processes data of a two-dimensional profile of the margin line and the most swelling portion line in the Z axis direction and omits the data below these lines, and a method that omits only the data that is moved in the Z axis direction free from the moving distance of the X and Y axes. The data obtained by the measurement of the retaining tooth gypsum model and processed by the data processing of the margin line is then subjected to male-female conversion and mirror conversion to give the inner surface shape data of a dental prosthesis such as a crown.

In this instance, the inner surface shape data is offset in some cases in the radial direction in consideration of a cement portion.

This data and the data after data processing of the most projecting portion line are prepared, and the portion from the margin line to the most swelling portion is surface-configured to obtain three-dimensional shape data of a dental prosthesis.

The three-dimensional shape measurement model is produced inside the oral cavity using a quick polymerization resin. The three-dimensional shape data is acquired and processed in the same way as described above. The inner surface shape data is utilized to produce the dental prosthesis. Therefore, this is a more preferred three-dimensional shape measurement model. In this instance, when a patient is caused to occlude the three-dimensional shape measurement model inside the oral cavity to a certain extent, an ideal occlusal surface can be obtained. Therefore, a dental prosthesis free from an offensive feel to the patient can be produced.

A method that omits the production of the three-dimensional shape measurement model is also possible. A database of a general three-dimensional shape model is prepared in advance and is processed by a computer, using the inner surface shape data obtained by the method described above to give one three-dimensional shape data of a dental prosthesis.

The present invention also provides the following method. A mass of wax or resin containing the minimum necessary information such as contact points, movement paths, the most swelling portion, etc, is produced and measured. The database of the tooth shape prepared in advance is processed so as to conform the three-dimensional data measured, and the deformed shape is processed.

In the case of coping a dental prosthesis, coping is conducted by using only the anchor tooth gypsum model trimmed as described above. The trimmed anchor tooth gypsum model is measured by using a three-dimensional shape measuring instrument, and the overhang portion below the margin line is data-processed. The data so obtained is used as the inner surface shape data in the same way as described above. Data of a portion having a certain height from the margin line is extracted from the data described above and a value in the radial direction is offset. Surface configuration is applied to the data and a zone to the margin line to obtain an outer surface shape data. These inner and outer surface shape data serve as the coping shape data. Machining data for an artificial tooth can be generated in the same way as coping.

The materials of the block are ceramics, metals, synthetic resins, woods and other materials that can be machined three-dimensionally by a three-dimensional machine tool, and are not particularly limited so long as they can be processed.

Tools are not particularly limited, either, so long as they can machine the block, that is, the work. Examples include an end mill, a diamond bar, and so forth. This also holds true of the machining plane.

The term "coaxial" is not particularly restrictive so long as the coordinate axis is the same such as the quadrature coordinate axes, the circular cylindrical coordinate axes, the spherical coordinate axes and those the coordinate axes of which are the same by a certain functional formula. The materials of the anchor tooth model, the work and the measurement material, the production method of the measurement material, the method of measuring or acquiring the three-dimensional shape, the machining method, the method and distance of offsetting the data, and the overhang direction, are not particularly limited.

In operation, the circular cylindrical portion (side surface portion) of a tool (cutting or grinding tool) is used to machine the mass material. Therefore, as the area of the tool coming into contact with the block is increased, the machining time can be reduced and life of the tool can be extended. A tool for rough machining and a tool for finish machining have been used separately in the past, but the method of the present invention can use the side surface portion of the tool for rough machining and the distal end portion of the tool for finish machining. Therefore, machining can be carried out without exchanging the tools between rough machining and finish machining.

Since the measuring area and the machining area are separated from each other and the measurement object and the work are disposed coaxially, the influence of contamination, by machining, on the measurement can be eliminated and positioning becomes easier.

A dental prosthesis which can be well fitted to an anchor tooth and has coincident margin lines can be produced easily and within a short time without depending on the skill of a dental technician.

Acquiring the impression inside the oral cavity and the production of the work model can be done relatively easily. In the case of the method described above that requires the model, however, the machine automatically conducts measurement and machining other than the production of the model and reduces the burden on the dental technician. However, the production of the model still requires the skill of the dental technician and troublesome work and time. Adaptability to the anchor tooth, to the adjacent teeth or to the counter tooth depends on accuracy of the model.

A more improved method creates the shape of the dental prosthesis from the basic shape of the database, and solves the problem of the production of the model described above. However, a problem is how to acquire high precision shape data of the anchor tooth, the adjacent teeth and the counter tooth. When the margin portion of the anchor tooth is measured, this measurement is a measurement of the gaps between the anchor tooth and the adjacent teeth of the model. Therefore, it is difficult to irradiate the laser beam for laser measurement to a predetermined position or to insert a probe for contact type measurement. In other words, it is difficult to improve measurement accuracy. It is also difficult to stipulate the positional relation of the counter tooth to determine the shape of the occlusal surface. To reflect the occlusal route (moving path or occlusion) with the counter tooth on the shape of the occlusal surface, the computer processing requires a great deal of time and burdens. When the resulting product is practically fitted as the dental prosthesis into the oral cavity, occlusion is not very satisfactory at present.

These problems can be solved by the following means.

The mold or the impression is placed in such a manner as to encompass the anchor tooth of the patient, and occulusion is made so as to transfer the shapes of the anchor tooth and surrounding teeth.

In this instance, the material of the mold or the impression is not particularly limited so long as it can transfer the shape of the tooth. Because the material is likely to undergo deformation by external force when it is removed from the anchor tooth, an ordinary dental impression material or settable resin is more preferred.

The mold or impression material so transferred is removed from inside the oral cavity, and its shape and size is measured. Laser measurement, contact type measurement, gray-scale measurement, moiré measurement, and the like, can be used so long as they can measure the shape and size. In view of high precision measurement of a small dental piece, however, contact type measurement is more preferred.

To create the shape of the dental prosthesis from the measurement data, the anchor tooth portion of the transferred resin is used as the inner surface data. The data of the adjacent teeth portion is used as the data of width (width in the cheek-tongue direction) and the length (length in near-far direction) and as the data from the occlusal teeth portion, the height and the occlusal surface shape.

As a procedure for measurement, the shape of the anchor tooth corresponding to the inside of the dental prosthesis is measured.

A part of the adjacent teeth facing the anchor tooth is measured, and the surface occluded by the counter tooth is measured.

To convert the data thus obtained to the data of the dental prosthesis, the basic shape data of this tooth, that is stored in advance, is called out.

The basic shape data is obtained by averaging the ideal forms for each tooth portion, that has been established in the dental field, or several kinds of shapes depending on portions. The basic shape data represents shape data of all portions or the shape of the zone from the most projecting portion to the occlusal surface.

In consideration of deformation and conversion of data, the shape of the zone from the most swelling portion to the occulsal surface is more preferred.

This data is recorded to the database preferably as image information and numeric value information, and is used by retrieving, calling, and calculating, as required. Incidentally, the data may be analog information, and is used whenever necessary.

The basic shape data is enlarged, diminished and rotated in accordance with the width (width in the cheek-tongue direction), the length (length in the far-near direction) and the height on the basis of the measurement data of the adjacent teeth. Next, the shape data on the side of the anchor tooth (inside) of the shape data of the mold or impression material transferred is adapted, and the surfaces are seamed in a zone ranging from the margin line portion to the most swelling portion. Finally, while the fossette and fissure (low portion of the tooth and groove) of the basic shape data are deformed or moved in match with the lower portion of the occlusal surface occluded with the counter tooth, the cusp (mountain-shaped portion of the tooth) of the basic shape data is deformed and moved in match with a higher portion. In this way, the optimum shape is created by calculation on the basis of the basic shape data, and the work is machined, very accurately, to this optimum shape. In consequence, the dental prosthesis having excellent adaptability can be produced.

The anchor tooth model is produced from the mold or impression material transferred, and its size and shape are measured and subjected to male-female conversion. The data is utilized as the information of the anchor tooth. The adjacent teeth and the counter tooth at other portions sometimes utilize the measurement data of the mold or impression material in the same way as described above. Several kinds of apparatuses and methods are available for measuring the size and shape. When the shape of a recess is excessively complicated, the present technology cannot correctly measure the shape. The present invention supplements this point, and is effectively utilized when the anchor tooth shape is complicated or when it is desired to measure more correctly the margin line portion. Whether or not the anchor tooth mold is used is selected appropriately.

There is also the case where the shape is transferred by the mold or the impression material using the anchor tooth model produced from the impression inside the oral cavity in the same way as in the ordinary dental remedy. This method can reliably transfer the shape, and is effective to confirm whether or not the transfer is completely made, and in the aspect of easiness of the work. This method, too, is selected appropriately.

The explanation given above deals with the dental prosthesis but the object material is not limited to the dental prosthesis so long as it is the material to be supplemented.

When CAD/CAM and machining are utilized for the dental field and are combined with the methods described above, not only a lost-wax method but also waxing-up, that need a high level of skill of dental technicians, can be eliminated. Furthermore, a dental prosthesis having high accuracy and high quality can be produced. The impression and the work model of the whole model (upper jaw to lower jaw) of the teeth of the patient become unnecessary, and the quantity of waste can be reduced. Since the work inside the oral cavity of the patient can be finished within a short time, the burden on the patient can be reduced.

To measure the recess, the laser measurement method involves the problem that the laser beam cannot be received, and the contact type measurement method involves the problem that the probe cannot reach the recess that is smaller than the probe. The present invention can measure highly accurately the recess by producing a model from the mold or the impression material and utilizing the model.

The following problems also occur when the dental prosthesis is produced.

A prismatic cutting block for a dental prosthesis is available at present as the material of the dental prosthesis for machining. When this prosthetic block is machined, machining must be carried out while the portion that is used as the prosthesis and a holding portion fitted to the machine tool are connected with each other. This connecting portion is not necessary when the prosthesis is used. Therefore, to reduce the burden during post-treatment, the connecting portion must be as small as possible. As the cutting quantity is large, a large burden is applied to the cutting tool such as a drill. To cut it deeply, a long cutting tool having a large cutting edge length and an effective length is necessary. When the cutting tool is elongated, the width of deviation and the deflection quantity become great with a drop of accuracy. When a crown is produced from a block having a rectangular machining portion, cutting is conducted in accordance with parallel cutting or a contour line cutting method that describes a rectangle. These methods need a long cutting time because the direction conversion occurs in the moving cutting tool and the speed is thereby increased or decreased.

These problems can be solved by the following method.

In the present invention, a support portion having a shape approximate to that of the interconnection portion with the holding portion is provided to the machining portion from which the prosthesis is produced. The present invention provides a prosthetic block including a holding portion for fitting to the machine tool, bonded to the support potion.

The shape of the support portion is not basically limited and may be a prism, a circular pillar, a square cone, a triangular cone, a circular cone, etc, but the circular pillar is preferred. The circular surface lies preferably in the direction of the machining portion and the holding portion. The materials of the machining portion may be those which are used for the dental use. The material of the holding portion is not particularly limited, either. When the expense and the mechanical strength are taken into consideration, however, the material is preferably a metal. When the support portion is provided to this machining portion, the cutting quantity of the interconnection portion with the holding portion becomes small. The cutting depth becomes small, too.

When machining of the crown is taken into consideration, a product portion of the machining portion preferably has a circular cylindrical shape. When this portion is circularly cylindrical, the machining tool can conduct in a contour line on a circle, the acceleration/deceleration range is small, and machining can be made at a constant speed.

As the support portion is provided to the machining portion, the length of the cutting tool may be short when the interconnection portion is cut, and deviation and deflection of the cutting, that have been a problem, can be eliminated. Since the machining portion is circularly cylindrical, the acceleration/deceleration range of the cutting tool becomes small and the cutting time can be reduced.

### BRIEF DESCRIPTION OF DRAWINGS

The present invention will become more apparent from the following description of the embodiments thereof taken in conjunction with the accompanying drawings, wherein:
Fig. 1 is a view showing an apparatus used in the present invention;
Fig. 2 is a plan view of a work when rough machining is conducted in an X-Y plane according to the first embodiment of the present invention;
Fig. 3 is a side view of the work of Fig. 2;
Fig. 4 is a plan view of the work when rough machining is conducted in an X-Z plane;
Fig. 5 is a view showing the work when rough machining at the surface (inner surface) of the anchor tooth is conducted;
Fig. 6 is a view showing the work when rough machining is conducted in an X-Y plane according to the second embodiment of the present invention;
Fig. 7 is a side view of the work shown in Fig. 6;
Fig. 8A is a view showing the work when rough machining is conducted in an X-Z plane;
Fig. 8B is a view showing the work of Fig. 8A when it is reversely rotated by 90° round an X axis as the center;
Fig. 9 is a view showing an anchor tooth gypsum model trimmed according to the third embodiment of the present invention;
Fig. 10 is a view showing the gypsum model of Fig. 9 when it is waxed up;
Fig. 11 is a view illustrating the three-dimensional shape measurement on the side of the occlusal surface that is waxed up;
Fig. 12 is a view illustrating three-dimensional shape measurement of the trimmed anchor tooth gypsum model;
Fig. 13 is a view showing the data of the three-dimensional shape measurement of Fig. 12 with a portion thereof below the margin line omitted;
Fig. 14 is a view showing inner surface machining data after the data of Fig. 13 is offset and male-female converted;
Fig. 15 is a view showing the three-dimensional shape measurement data of Fig. 11 with a portion below the most swelling portion omitted;
Fig. 16 is a view showing the state where the portion from the margin line to the most swelling portion line is subjected to surface configuration;
Fig. 17 is a view showing the result of synthesis of crown shape data and rib data for machining;
Fig. 18 is a view showing coping inner/outer shape data generated according to the fourth embodiment of the present invention;
Fig. 19 is a view showing the result of synthesis of coping shape data and rib data for machining;
Fig. 20 is a view showing the state where a porcelain material is baked to a titanium coping;
Fig. 21 is a structural view of an apparatus according to the fifth embodiment of the present invention;
Fig. 22 is a view showing the oral cavity of a patient with an anchor tooth formed;
Fig. 23 is a view showing the state where a settable resin is put on the anchor tooth so formed;
Fig. 24 is a view showing the state where a settable resin is occluded and a model is transferred to the resin;
Fig. 25 is a view showing the shape measurement state of the resin so transferred;
Fig. 26 is a view showing the shape measurement state of the anchor tooth model;
Fig. 27 is a view showing the state where resin measurement data so transferred and basic shape data are superposed;
Fig. 28 is a view showing optimization of basic shape data;
Fig. 29 is a view showing the result of synthesis of optimized basic shape data and inside data;
Fig. 30 is a view showing the state where shape data of Fig. 29 is converted to machining data;
Fig. 31 is a view showing a grinding step of a crown;
Fig. 32 is a view showing the state where a tooth is fitted into the oral cavity of a patient;
Fig. 33 is a view showing an example of the construction of a machine tool according to the sixth embodiment of the present invention;
Fig. 34 is a perspective view showing an embodiment of a cutting block for a dental prosthesis;
Fig. 35A is a front view of the cutting block for a dental prosthesis;
Fig. 35B is a left-hand side view of the cutting block for a dental prosthesis;
Fig. 35C is a plan view of the cutting block for a dental prosthesis;
Fig. 35D is a rear view of the cutting block for a dental prosthesis;
Fig. 35E is a right-hand side view of the cutting block for a dental prosthesis;
Fig. 35F is a bottom view of the cutting block for a dental prosthesis;
Fig. 36 is an explanatory view for explaining the state where crown and interconnection portion shape data are superposed with the cutting block according to this embodiment;
Fig. 37 is a view for explaining an occlusal surface cutting step in this embodiment; and
Fig. 38 is an explanatory view for explaining a anchor tooth surface cutting step in this embodiment.

### BEST MODE FOR CARRYING OUT THE INVENTION

### First Embodiment

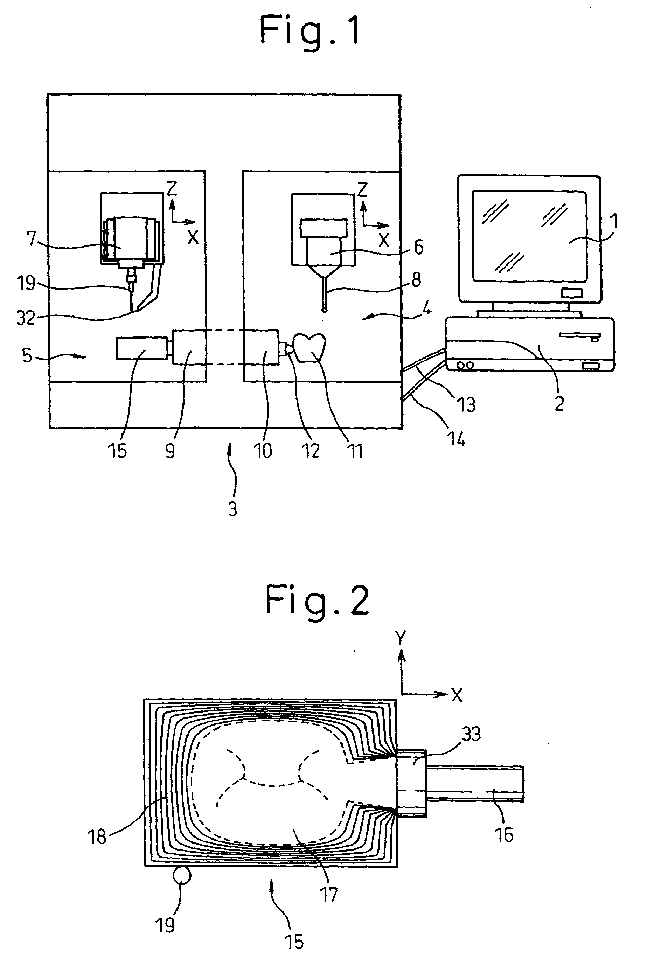

The machine tool used in the present invention is basically an NC machine tool which is used for machining a mold or the like. A crown of a dental prosthesis is machined by grinding in this apparatus. However, the NC machine tool for cutting molds in general is large in scale, and its cutting accuracy is not suitable for medical and dental materials. Therefore, the cutting tool 3 shown in Fig. 1 is improved to have a compact size and its cutting accuracy.

The NC machine tool 3 in Fig. 1 is divided into a three-dimensional shape measuring area 4 and a three-dimensional machining area 5. A three-dimensional shape measuring probe 6 equipped with a contact device 8 is disposed in the three-dimensional shape measuring area 4. The three-dimensional shape measuring probe 6 is put on an X-Y-Z axes table, and can move three-dimensionally. An AC servomotor equipped with an encoder is used as a power source for each axis. A spindle motor 7 is disposed in the three-dimensional machining area 5. The spindle motor 7 can move three-dimensionally in the same way as the three-dimensional measuring area 4.

To control the operation, a personal computer 2 is connected to the NC machine tool 3. A CRT display 1 is connected to the personal computer 2. Reference numeral 13 denotes a cable for sending three-dimensional measurement data to the personal computer 2, and reference numeral 14 denotes a cable for sending data to control the NC machine tool. Also, a water injecting nozzle 32 is disposed for cooling and removing waste from the work, and the three-dimensional machining area 5 is rendered waterproof. A jig 10 for fitting a measurement model (crown model) 11 thereonto in the three-dimensional shape measuring area 4 and a jig 9 for fitting the work 15 thereonto in the three-dimensional machining area 5 are connected to each other within the machine tool. An AC servomotor equipped with an encoder that is used for driving respective shafts can rotate the jigs 10 and 9. When the work 15 is machined according to the measured data as just measured, the work 15 is machined into the shape in the mirror-inversion relationship with the measurement model 11. Therefore, the data of the X- and Y-axes that are once measured are subjected to mirror-inversion, and the resulting data is sent to the NC machine tool for machining.

The measurement model (crown model) 11 is produced from the resin that is instantaneously polymerized in the gypsum model used for dental remedy, bonded by an adhesive to a rib 12 for the measurement model capable of deciding positioning of measurement, and fitted to the machine tool. The three-dimensional shape measuring probe 6 measures the shape of the measurement model 11, and the result is processed as the measurement data by the personal computer 2. This personal computer 2 also processes the measurement data to grinding machining data. The grinding machining data includes rough machining data by which a certain block is cut or ground to a shape approximate to the object shape, and finish machining data by which the block is finished from the roughly machined shape to the object shape.

Porcelain that is practically used for the dental prosthesis is shaped into a prismatic block for grinding machining the crown, and work is thus prepared. The work 15 comprising this porcelain prismatic block is installed to the machine tool in the same way as the measurement model 11 for the three-dimensional shape measurement. The grinding machining method is conducted while the personal computer 2 feeds the grinding machining data to the machine tool 3. The grinding machining process is divided into the rough machining step and the finish machining step. A diamond bar tool having a diameter of 2 mm is used for rough machining and a diamond bar tool having a diameter of 1 mm is used for finish machining.

Rough machining is carried out in accordance with the machining method of the present invention.

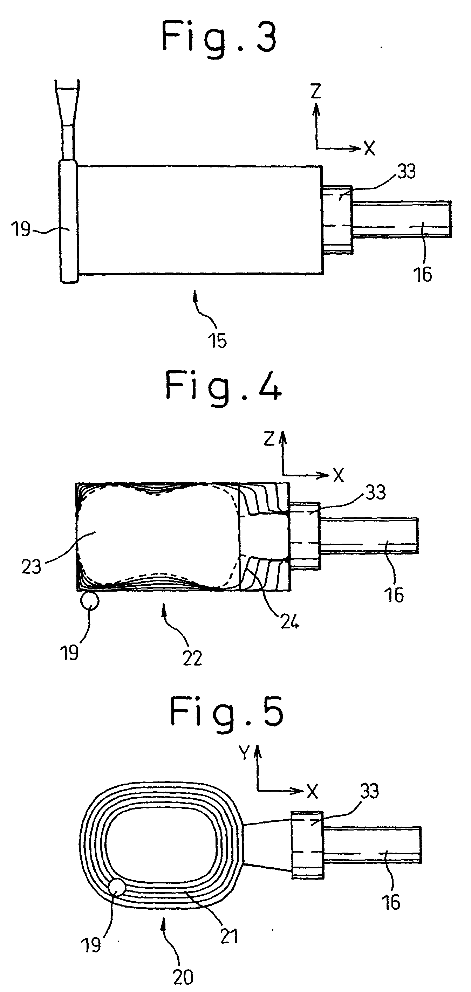

Figs. 2, 4 and 5 are plan views of the work 15 as the block to be machined, viewed from above, and Fig. 3 is a side view of the work 15, viewed from one of its sides. Reference numerals 15, 20 and 22, assigned to the work, are different but show the same work.

The work 15 comprising the porcelain prismatic block is machined by the side surface of the diamond bar tool 19 having a diameter of 2 mm, according to an approximate shape of the measurement model (crown model) 11 in the X-Y plane shown in Fig. 2 projected onto the work 15, up to the outer shape (indicted by dotted line) 17. Reference numeral 18 represents a profile during the machining in the crown model X-Y plane by lines. Each portion of the profile 18 represents the machining orbit by one machining operation by the tool, and the machining is conducted sequentially a plurality of times from outside to inside, with the passage of time.

The gap between the portions of the profile and the number of machining represented by the profile portions are decided in the pre-stage of machining based on the comparison of the measurement data with the size of the block to be machined. When the machining quantity is great, the gap is enlarged, and when the machining quantity is small, the gap is reduced. In this way, the machining operation is carried out substantially around the block and reciprocatingly.

Incidentally, it is preferred to conduct the machining operation in such a manner as to describe the profile and to reciprocate without interruption as shown in the drawings. However, the machining operation may be stopped and then returned to the start because there may be a case where the difference value between the model and the block is great depending on portions, and the machining operation without return need not be carried out.

The gap between portions of the profile is preferably within the range of 0.01 to 2 mm, by the control described above, but it can be selected appropriately depending on a material, porosity, shape, etc, of a material when the material is a porous material.

Next, the work 15 that is ground to the outer shape 17 shown in Fig. 2 is rotated by 90° about the X axis, as shown in Fig. 4, and this is represented by a work 22. As to the rotation quantity, the work is preferably rotated every 90°, but this value is not restrictive so long as the contact property between the tool and the machined surface is excellent, and the rotation quantity may be adjusted appropriately.

The work is ground a plurality of times to the outer shape (indicated by dotted lines) 23 obtained by projecting an approximate shape of the measurement model (crown model) in the X-Z plane as shown in Fig. 4. Reference numeral 24 represents the portion of the profile formed by one cutting operation.

In this case, the grinding operation is conducted from outside to inside in the same way as in Fig. 2. The distance of the gap between the profile portions is preferably 0.01 to 2 mm, but this value is selected appropriately in the same way as described above.

After the work 22 is roughly machined in the X-Z plane by the grinding operation described above, the work 22 is rotated by 90° about the X axis.

The work after rotation is indicted by reference numeral 20 in Fig. 5. Fig. 5 shows a surface (inside surface) of an anchor tooth of the work 20.

The anchor tooth surface side (inside surface) of the measurement model is ground according to the contour lines 21, and rough machining is completed.

One contour line 21 is formed by one machining operation. The gap between the contour lines is preferably 0.01 to 2 mm, but this is not restrictive. The gap is selected appropriately depending on materials used, such as porosity, shape, etc, in the case of a porous material.

The greater the gap of the contour lines 21 forming the profile, the coarser the surface becomes, and the smaller the gap, the finer the surface becomes. Therefore, the gap is preferably fine. However, when the gap is fine, the number of times of profile machining becomes greater and the machining time becomes longer. Therefore, the gap is preferably about 1 mm.

A diamond bar tool having a diameter of 1 mm is used to replace the diamond bar tool having a diameter of 2 mm, and finishing of the anchor tooth surface side (inside surface) of the work 15 (20) is conducted by an ordinary method. One layer from the approximate shape to the object shape is ground. The work (porcelain prismatic block) 15 (20) is then inverted by 180°, and the occlusal surface of the crown is finish machined. The work so finished is removed from the machine tool, and the rib portion is cut off manually. Manual grinding is done to finish the product.

When conventional rough machining is conducted by sequentially lowering the diamond bar tool from the upper surface toward the lower part, about 4 hours are necessary. One diamond bar tool can be used for rough machining for only two to three workpieces. When the machining surface of the tool is effectively used as in the method of the present invention, however, machining can be finished within about 1 hour. Moreover, one diamond bar tool can grind for 4 to 5 workpieces.

It has conventionally been necessary to clean the work area 4 whenever measurement is made. Since the area is divided into the measuring area 4 and the machining area 5 in the present invention as shown in Fig. 1, however, cleaning need not be made whenever measurement is effected. Also, the article to be measured and the work are arranged on the same shaft, and a rib stopper 33 is provided for adjusting the quantity of the ribs inserted in respective jigs, whereby positioning is reliably effected and the three-dimensional shape of the work (crown model) 15 can be reproduced.

If the side surface of the tool is used to machine the work in match with the profile to the object shape, the present invention is not limited to the illustrated embodiment.

### Second Embodiment

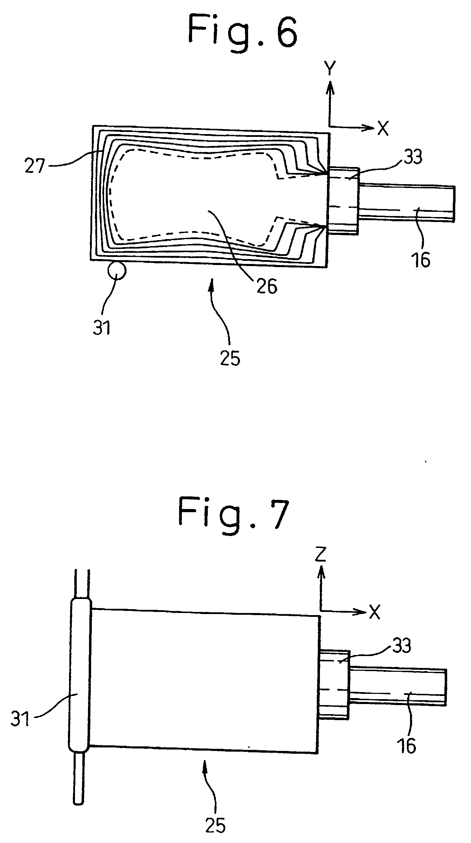

An inlay for a dental prosthesis is ground from a work 25 comprising a porcelain prismatic block using the machine tool used in the first embodiment as shown in Figs. 6, 7, 8A and 8B. An inlay model is produced from a quick polymerization resin in a gypsum model used for dental remedy, and machining data is prepared in the same way as in the first embodiment.

A diamond bar tool 31 having diamond whetstones having a diameter of 3 mm and a diameter of 1 mm capable of both rough grinding and finish grinding of a work 25 comprising a porcelain prismatic block, respectively. A cylindrical portion (side surface portion) of the large portion of the diamond bar tool 31 having a diameter of 3 mm is used for profile-grinding the work 25 to the outer shape 26 obtained by projecting an approximate shape of the inlay model in the X-Y plane of the work 25.

The distance between the portions of the profile 27 in the profile machining in this embodiment is preferably 0.01 to 3 mm. However, this value is not restrictive and may be selected appropriately depending on materials used, such as porosity, shape, etc, in the case of a porous material, for example.

The work 25 is then rotated by 90° about the X axis, and is represented by reference numeral 28. Grinding of the work is similarly conducted to the outer shape 29 (represented by dotted line) obtained by projecting an approximate shape of the inlay model in the X-Z plane.

Reference numeral 30 denotes the profile of machining that is formed by one machining operation. The gap between portions of the profile is 0.01 to 3 mm, and is suitably selected depending on materials used, such as a porosity, shape, etc, in the case of a porous material, for example.

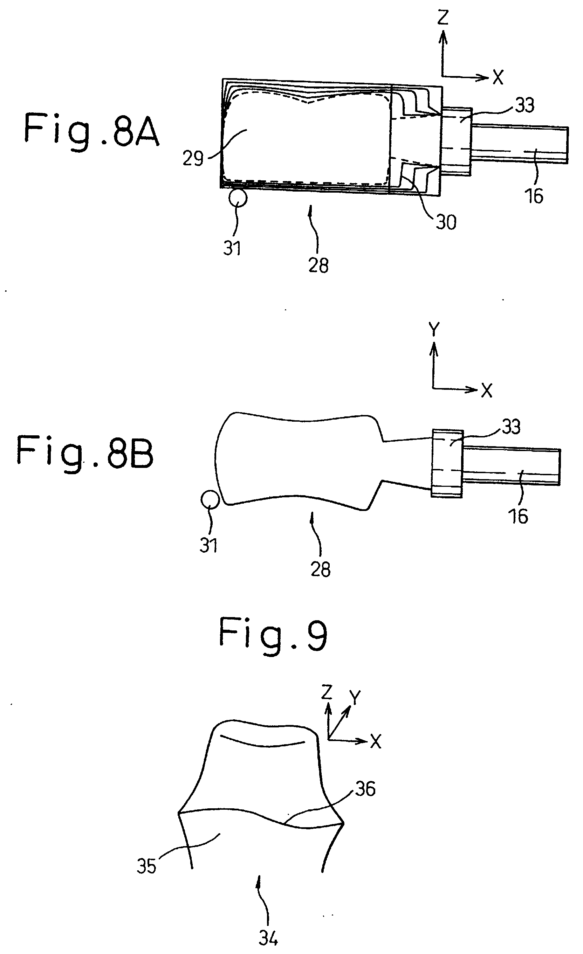

Next, before finish machining is conducted, the rough machined work 28 is rotated by 90° about the X axis so as to attain the X-Y plane before rough machine. Fig. 8B depicts this state.

One layer from the approximate shape to the object shape is machined in the same way as in ordinary finish machining.

Thereafter, the work (porcelain prismatic block) 28 is inverted by 180° about the X axis, and the back side of the inlay is finish ground. At this time, the small portion of the diamond bar tool 31 having the diameter of 1 mm is used for finish machining. The inlay so finished is removed from the machine tool, the rib portion is cut off manually, and manual polishing of the work is done to finish the product.

When this inlay is machined, the inlay can be machined in the same way as described above using only a diamond bar tool having a diameter of 1 mm. However, when the diamond bar tool 31 having the diamond grind stone of 3 mm for rough grinding and the diamond grind stone of 1 mm for finish grinding is used, the work can be machined in a greater machining quantity during rough machining. In consequence, machining can be made within about a half of the time. Furthermore, the present method can conduct continuously rough grinding and finish grinding.

Incidentally, when grinding is conducted using the side surface of the tool till the object shape in match with the profile by using one tool, the machining operation is not limited to the embodiment described above.

### Third Embodiment

A crown for a dental prosthesis is produced from the shape of an anchor tooth gypsum model, and an unfinished occlusal surface wax model, using the machine tool in the first embodiment.

### Formation of Model

An impression is obtained from the oral cavity of a patient, and an anchor tooth gypsum model is created. As shown in Fig. 9, an anchor tooth gypsum model 34 having a portion 35 formed by trimming the gingiva portion below the margin line 36.

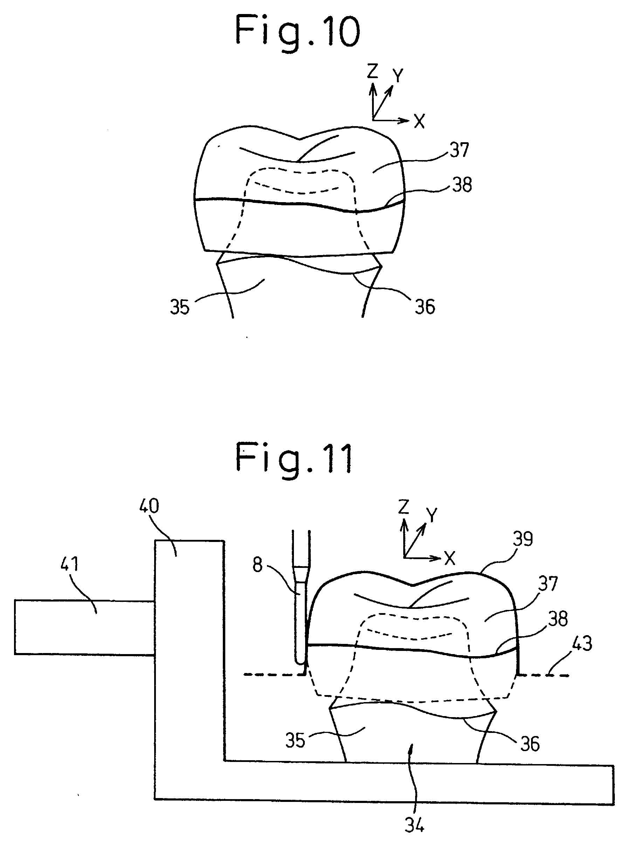

Fig. 10 shows a wax model 37 that is formed in match with adjacent teeth and a counter tooth, for the anchor tooth gypsum model so trimmed. In an ordinary wax-up process, the crown shape is produced, taking care of the matching with the important margin line 36. In the method of the present invention, however, any shape may be used so long as the portion below the most swelling portion (line) 38 has an overhang shape.

### Surface Measurement of Model

Fig. 11 shows three-dimensional shape measurement of the wax model 37. The anchor tooth 34 supporting the wax model 37 thereon is fitted to a fixing adaptor 40. A rib 41 of the fixing adaptor 40 is clamped by and fixed to the fitting jig 10 of the measuring area 4 of the machine tool shown in Fig. 1.

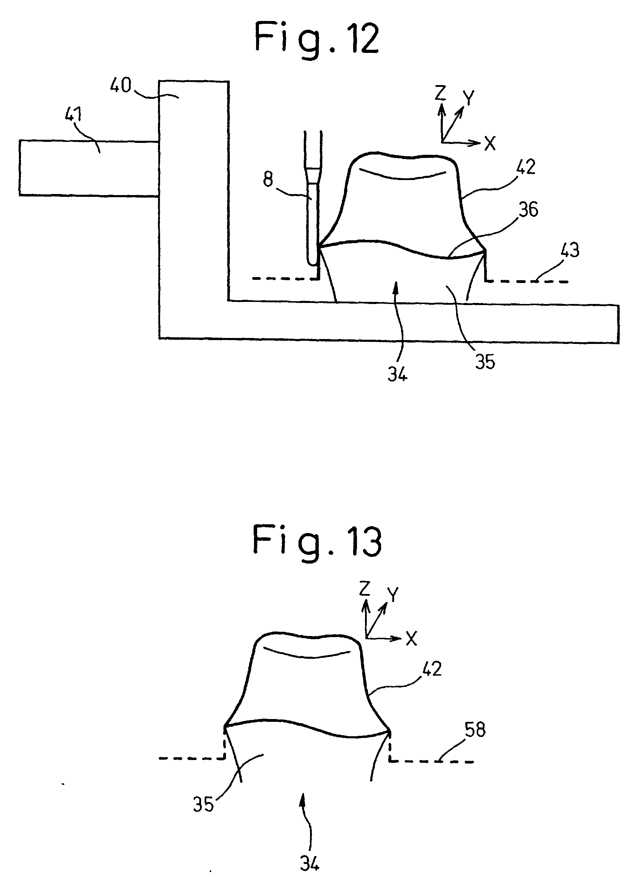

The contact element 8 of the machine tool shown in Fig. 1 is caused to run along the surface 39 of the wax model 37 so as to acquire the X, Y and Z coordinate points on the surface 39. The shape of the portion below the most swelling portion 38 of the wax model 37 describes the overhang. Therefore, its coordinate points are not acquired but are acquired as the shape formed by extending downward the profile of the most swelling portion 38. In this instance, the personal computer 2 executes setting so that the contact element 8 does not strike the fixing adaptor 40 and, when the contact element 8 descends to the lower limit line 43, the contact element 8 retreats in the X-Y plane direction. Thereafter, the wax model 37 is removed, and the shape of the surface 42 of the anchor tooth gypsum model 34 is likewise measured. Fig. 12 shows this measurement. In this case too, the portion below the margin line 36 is trimmed (35). Because of the overhang state, that is, because of protrusion of the margin line, the measuring probe 8 cannot come into contact with the trimmed portion and the data cannot be obtained.

Therefore, the data is the shape data of the surface 42 of the anchor tooth gypsum model 34 in the same way as the surface 39 of the wax model 37. Fig. 13 depicts the surface shape data 42.

### Processing of Measurement Data

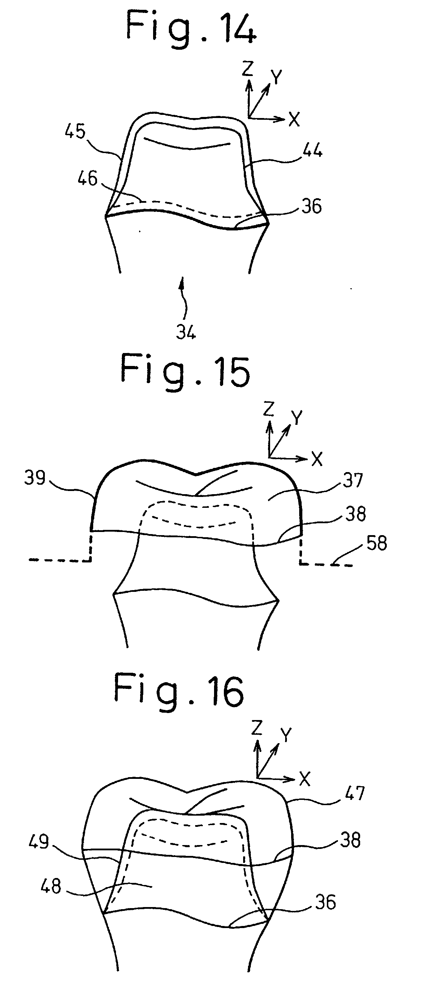

Three-dimensional shape data is generated from the measurement data of the respective shapes. Fig. 14 shows a method of processing the shape measurement data of the anchor tooth gypsum model. The data of the overhang shape below the margin line 36 of the anchor tooth gypsum model 34 has no value displaced in the X and Y direction, and is the data displaced in the Z direction.

The boundary between the data in which values change in the directions of the X, Y and Z axes, and the data in which values do not change in the X and Y directions and values change in the Z direction, becomes the margin line 36, and the data below the boundary line, that is, the margin line 36, in the Z direction, is omitted. The remaining data is the shape data 44 of the anchor tooth.

Thereafter, a portion of the data above a line 46 having a certain height from the boundary line or the margin line 36 is offset by 50 µm in the direction in the normal direction, and the offset value of a portion of the data below the line 46 is decreased progressively from the line 46 to the line 36, thereby preparing data 45.

The certain height in this instance is 1.0 mm from the margin line 36. The offset surface configuration data 45 is subjected to male-female conversion to obtain the inner surface shape data of the crown.

The purpose of the offsetting is to facilitate smooth setting of the crown and to provide a space for a cement layer for bonding the crown. It also takes a clearance for the machining tool into consideration. Processing of crown outer surface machining data is also executed in the same way as described above.

The offset value is decided in accordance with the amount of the adhesive, easy setting capability, and so forth, and is preferably within the range of 20 to 100 µm. The curve obtained on the basis of the offset value and the margin line is preferably determined by a smooth curve such as a spline curve, a Beje curve, etc, but it is not limited thereto.

Fig. 15 shows surface shape data 39 of the wax model 37. Data below the most swelling portion 38 in the Z direction is omitted. The data omission method is the same as the one described above.

The remaining occlusal surface shape data 47 and inner surface shape data (data obtained by male-female conversion of the anchor tooth shape data) 49 are combined. In combining these data, occlusal surface shape data 47 and inner surface shape data 49 are positioned to each other, using the installation position of the anchor tooth gypsum model 34 as the reference. Thereafter, the surface is configured 48 based on the data from the most swelling portion 38 to the margin line 36, and one crown shape data 50 is obtained.

The surface data is obtained by calculating control points between data.

A known method for obtaining a curved surface by taking the margin line 36 and the most swelling portion 38 as boundary curves and utilizing the control points between them utilizes a Beje curve or a spline curve, and the curved surface data is calculated by such a method.

The rib shape data 51 for clamping the work during machining is combined with the crown shape data 50.

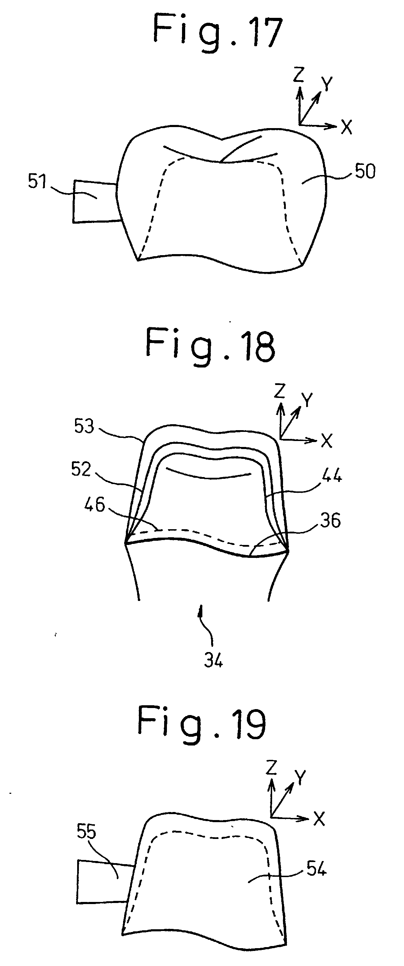

Figs. 16 and 17 show these features.

On the basis of this crown shape data 50, a porcelain prismatic block is machined using a diamond bar tool in the same way as in the first embodiment, and the crown of a dental prosthesis is produced. Conformity of the margin line and adaptation of the inner surfaces, that have required a high level of technique in the past, can be conducted satisfactorily. Even when the wax model is produced much more roughly than in the prior art method, the method of the present invention does not affect accuracy of the resulting dental prosthesis.

In this embodiment, the wax model is produced from the anchor tooth gypsum model. However, if the anchor tooth model is available, crown shape data may be obtained on the basis of the model data formed in the oral cavity of the patient or the data obtained by modifying or converting the existing occlusal surface data. The boundary lines such as the margin line and the most swelling portion can be extracted by the method that measures in advance a profile of the maximum area in the X-Y plane, collating the shape measurement data with the measurement data and omits the overhang portion. Though the embodiment represents typically the crown of the dental prosthesis, the method of the present invention can be applied similarly to a juncture crown. In the case of a bridge, pontic (dummy) data is prepared, and this data is modified or converted to cope with the bridge. The anchor tooth model, the materials of the work and the measured material, the three-dimensional shape measurement method, the machining method, the method of offsetting the data and its value, and the overhang direction described above, are illustrative but in no way restrictive.

### Fourth Embodiment

A coping (frame) is produced from an anchor tooth gypsum model using the machine tool of the first embodiment. An impression is obtained from inside the oral cavity of a patient to produce an anchor tooth gypsum model. The gingiva portion below the margin line 36 is trimmed (35) to prepare the anchor tooth gypsum model 34, as shown in Fig. 9.

The shape of the anchor tooth gypsum model is measured in the same way as in the third embodiment (Fig. 12). Thereafter, data of the overhang portion is omitted to generate anchor tooth shape data 44.

Similarly, data of a portion below a line 46 having a height of 1.0 mm from the boundary line, that is, the margin line 36, is omitted. In this way, data offset by 50 µm in the normal direction and data 45 surface-configured up to the margin line 36 are prepared. Offset surface configuration data 45 is subjected to male-female conversion and mirror conversion to generate inner surface shape data 52 of the coping. Outer surface shape data 53 of the coping is acquired in the following way. Data of the portion below a line having a height of 0.6 mm from the margin line 36 of the anchor tooth shape data 44 is omitted and is offset by 0.5 mm in the direction of the normal, and the portion up to the margin line 36 is subjected to surface configuration. Fig. 18 shows this data. Fig. 19 shows the case where the inner surface shape data 52 of the coping and the outer surface shape data are combined to one coping shape data 54, to which rib data 55 for machining is added.

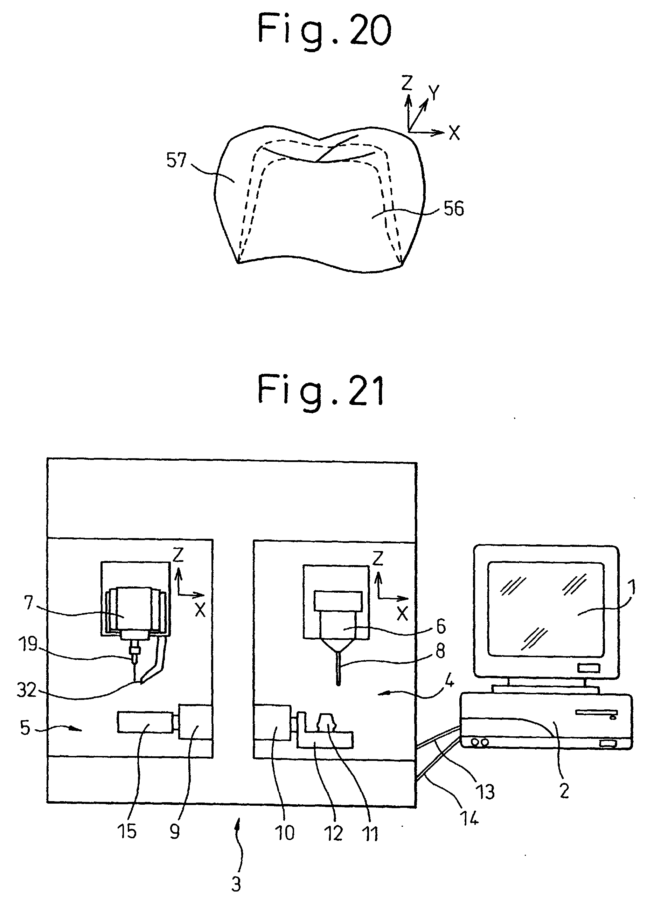

On the basis of this data ordinary machining of titanium is conducted by using the machine tool of the first embodiment. A rib portion is cut off from the titanium coping 56 thus produced. Earthenware 57 is attached to and baked with this titanium coping 56 to finish the product shown in Fig. 20.

A juncture crown, a frame of a bridge and a denture base can be produced by the same method. The materials of the anchor tooth model and the work, the three-dimensional shape measurement method, the machining method, the data offsetting method and its value, and the overhang direction, are not limited to those illustrated above.

When machining is made to a certain object shape, the present invention can reduce the machining time, extend the life of the tool and decrease the number of process steps. The present invention can easily accomplish inner surface adaptation of the dental prosthesis and conformity of the margin line.

Therefore, the present invention can promote a remarkable progress of mechanization in the dental field, in particular. In consequence, the present invention can eliminate the necessity for the skill of dental technicians, reduce the number of steps involved in the production of the dental prostheses and manual labor, and supply high quality dental prostheses.

### Fifth Embodiment

As shown in Fig. 21, a machine tool used in the fifth embodiment is based on an NC machine tool used as a machine for machining a mold, or the like. This machine tool is used to machine the crown of a dental prosthesis. However, the NC machine tool for cutting/grinding molds in general is large in scale, and its machining accuracy is not suitable for the medical and dental materials. Therefore, the machine tool 3 is modified into a smaller size and to higher machining accuracy. In the present invention, the term "machining" includes cutting, grinding, discharge machining and other machining means for machining a work to an object shape.

The NC machine tool 3 shown in Fig. 21 is divided into a three-dimensional shape measuring area 4 and a three-dimensional shape machining area 5. A three-dimensional shape measuring probe 6 equipped with a contact element 8 is disposed in the three-dimensional shape measuring area 4. The three-dimensional shape measuring probe 6 is put on an X-Y-Z axes table and can move three-dimensionally. An AC servomotor equipped with an encoder is used as a power source of each axis. A spindle motor 7 is disposed in the three-dimensional machining area 5. The spindle motor 7 too, can move three-dimensionally in the same way as the three-dimensional shape measuring area 4. A personal computer 2 is connected to this NV machine tool 3 so as to control the operation.

A water injecting nozzle 32 is disposed for cooling and removing waste from the work, and the three-dimensional machining area 5 is rendered water-proof. A jig 10 for fitting a rib 11 having a measurement model 11 fitted thereto in the three-dimensional shape measuring area 4 and a jig 9 for fitting the work 15 in the three-dimensional machining area 5 are connected to each other in the machine tool. The AC servomotor equipped with an encoder can rotate the jig 9. When the measurement data is as such used for machining, the work is machined into a shape having mirror inversion to the measurement model 11.

Therefore, the personal computer 2 once executes mirror inversion of the X and Y axes for the measurement data and sends this data to the NC machine tool for machining.

A method of creating the shape of the crown of an lower jaw molar tooth by using the machine tool described above will be explained.

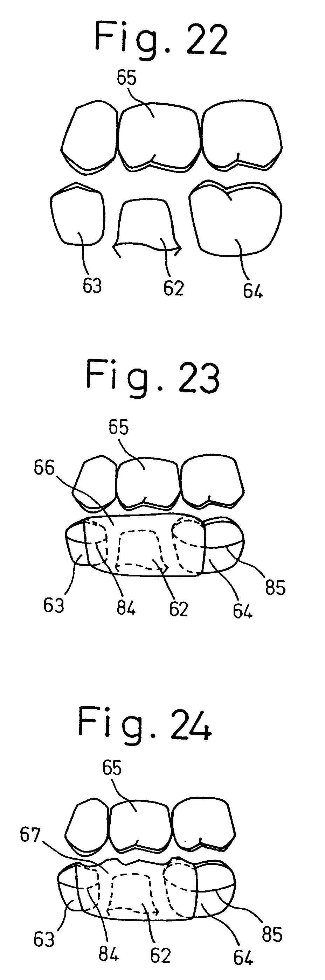

Fig. 22 shows the oral cavity of a patient. An anchor tooth 62 is formed in consideration of fitting of the crown inside the oral cavity according to the judgment of a dentist.

As shown in Figs. 23 and 24, a settable resin 66 such as an acrylic resin is so applied as to encompass the anchor tooth 62 and at least the half of adjacent teeth 63 and 64. Before the resin is completely set, the patient occludes the anchor tooth by a counter tooth 65 and moves the jaws to the right and left. The term "before complete setting" means the period starting from the application of the settable resin. The resin under the clay-like state is preferable because it can provide excellent data. The reason why the jaws are moved to the right and left is to reflect the occuluding behavior inherent to a patient on the dental prosthesis to be produced. This is based on the same concept as that of FGP technique.

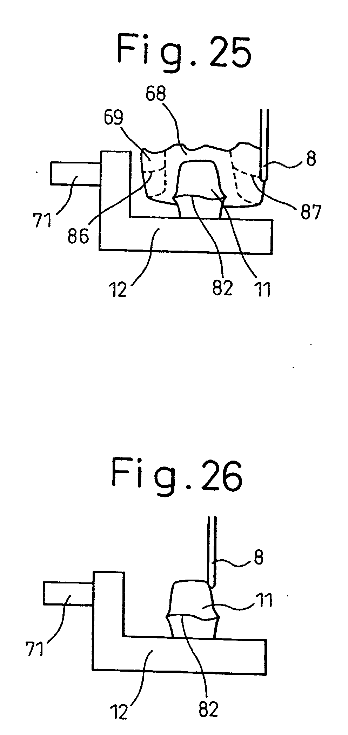

After the resin is completely set, the transferred resin 67 (66) is removed. It is then confirmed whether or not the impression of the anchor tooth 62, the adjacent teeth 63 and 64 and the occulusal tooth 65 is acquired reliably, and burrs that cover the occulusal surface of the adjacent teeth are cut and removed to match the most swelling portions 86 and 87 (see Fig. 25) of the adjacent teeth 69 and 70. Here, the most swelling portion is determined by examining the profile cylindrical shape from above by eye.

Gypsum is then poured into the anchor tooth portion of the resin 68 so transferred, and an anchor tooth model 11 is produced. The anchor tooth model is produced in such a fashion that the portion below a margin line 82 (see Fig. 26) describes an overhang (or under-cut) as viewed from above.

The transferred resin 68 (66) and the anchor tooth portion 11 are fitted to the anchor tooth fitting jig 12, and the jig 12 is then arranged as a whole in the three-dimensional measuring area 5 of the NC machine tool 3.

The contact element 8 measures the shape of the transferred resin 68, as shown in Fig. 25. The transferred resin 68 is then removed from the anchor tooth 11 fitted to the NC machine tool 3. The contact element 8 similarly measures the shape (Fig. 26). During this operation, the shape of the anchor tooth, a partial shape of adjacent teeth and the occlusion condition of the counter tooth are measured.

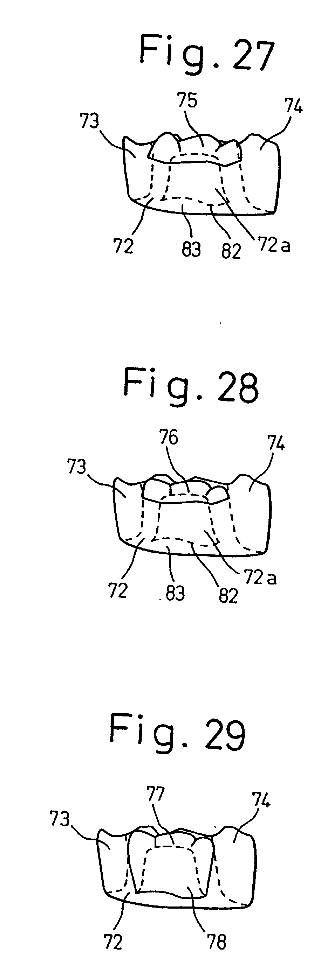

Fig. 27 shows the measurement data 72 of the transferred resin 68 superposed with the basic shape data 75 of the lower jaw molar tooth that is recorded in advance. Thereafter, the basic shape data 75 is enlarged or diminished to match the width of the adjacent teeth measurement data 73 and 74 and the distances from the adjacent teeth.

The basic shape data is generated in the following way. A plurality of shapes of teeth preferably having a statistically high frequency, that can be assumed as described above, are determined in advance as image digital information, numeric value digital information, etc, that can be compared with the data obtained, and are stored in the storage device used for the personal computer such as CD, MD, hard disk, FD, etc, and stored as a data base so that it can be looked up, called and selected as desired.

Selection judgment is made similarly and approximately, and visual approximation such as the shape of the occlusal surface and numerical approximation such as the length, width, height, etc, are used as the judgment factors.

Utilization of such a database makes it possible to simplify the machining process and to shorten the machining time.

The height of the basic shape data is decided in such a fashion as to correspond to the position of the portion transferring the condition of the counter tooth. The height is decided by moving the pit fissure of the basic shape data 76 to match the lower part of the portion transferring the counter tooth 65.

Furthermore, the height is decided by moving the cusp of the basis shape data 76. The data of the overhung portion below the margin line 82 of the anchor tooth model measurement data 72a is omitted, and male-female conversion is made to obtain inside data 78 of the crown. Fig. 29 shows the state where the inside data 78 of the crown is connected to the basic shape data 76 that is most appropriately deformed.

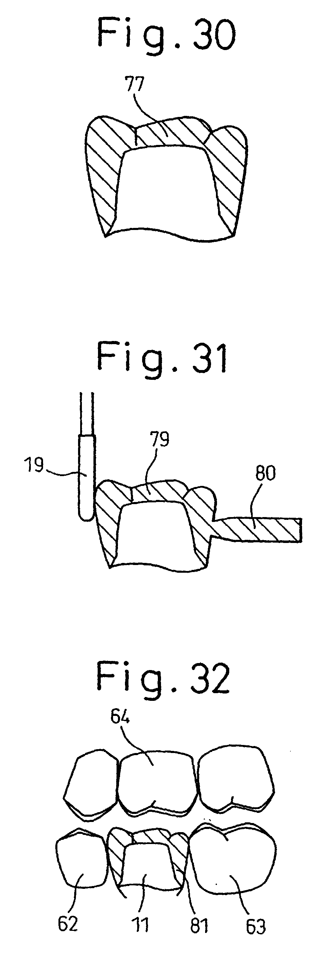

The crown shape data 77 so created is converted to machining data so that machining can be conducted, as shown in Fig. 30. The conversion method used at this time is an ordinary NC machining data conversion method.

A work 15 comprising a ceramic block (porcelain block) is fitted to the three-dimensional machining area 5 shown in Fig. 21 and is machined by an ordinary NC machine tool machining method using a diamond bar 19 to produce a crown 79 of the lower jaw molar tooth, as shown in Fig. 31. Thereafter, a machining rib 80 is cut off. The crown 81 is polished and is fitted into the oral cavity of the patient to complete the operation as shown in Fig. 32.

This embodiment can mechanize remedial operations, such as wax-up, lost-wax, occlusion adjustment by using a working model, etc, that have required the skills of dental technicians.

The embodiment given above explains further concretely the present invention. However, the present invention is not limited to this embodiment.

As the shapes of the anchor tooth, adjacent teeth and counter tooth and their positional relationship are measured easily and, moreover, accurately, this embodiment can create the shape of the dental prosthesis by calculation of the numerical values from the basic shape and can produce by machining the dental prosthesis having excellent adaptability. Consequently, this embodiment can eliminate the troubles of producing the model and the necessity for a high level of skill of the dental technician and can produce easily and within a short time the dental prosthesis having excellent adaptability. Sixth Embodiment

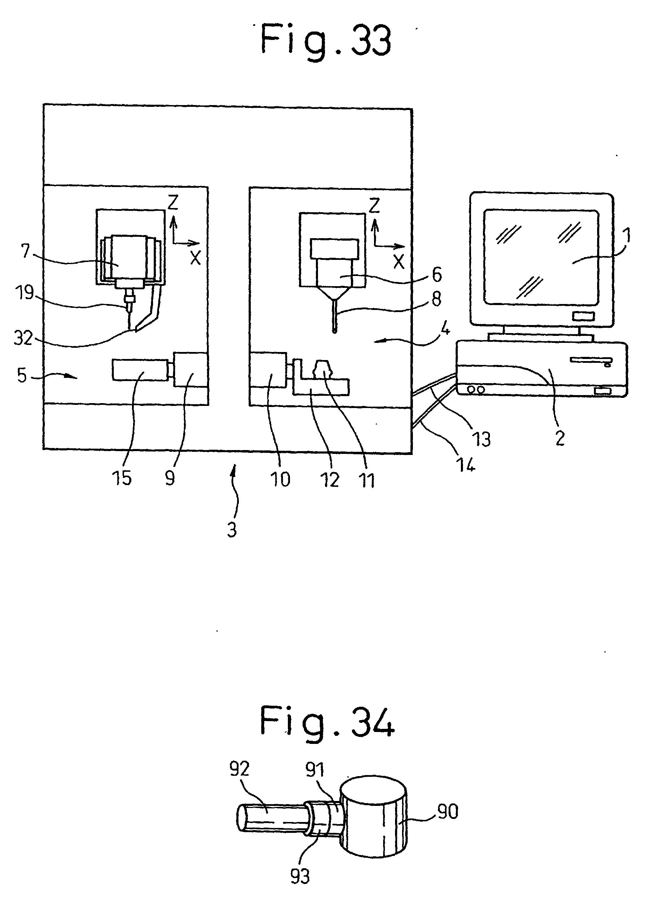

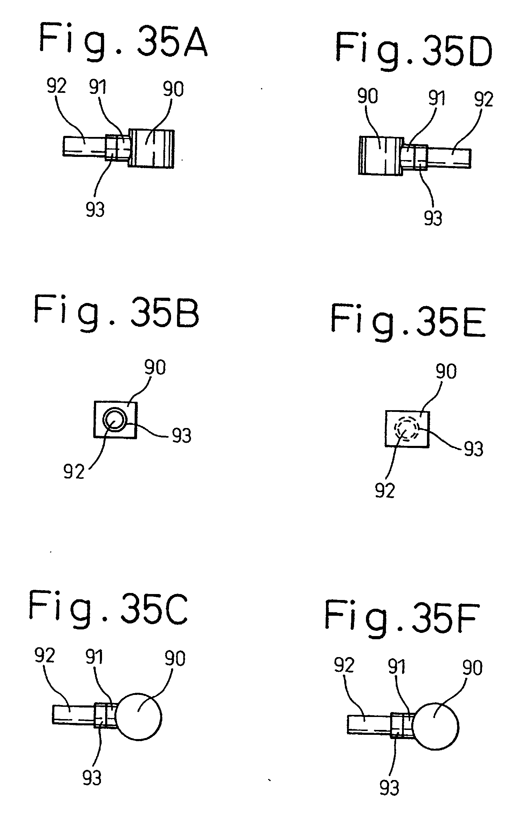

Fig. 33 shows a machine tool 3 used in the sixth embodiment. The machine tool 3 is substantially the same as the machine tool 3 shown in Fig. 1. Figs. 34 and 35 depict a work (article to be machined) 90 which is machined by the machine tool 3 to an object shape. The work 90 that corresponds to the work 15 shown in Fig. 33 is fitted to the machine tool 3 through a holding member 92 for connecting the work 90 to the machine tool 3, and through a support member 91.

The work 90, which is an article to be machined by a drivable cutting tool 19 equipped with a drill and a file, is made of ceramic, resin or metal (titanium, titanium alloy, a precious metal compound such as silver and other ordinary materials used for dental remedy). Preferably, the material of the work 90 has good cuttability and affinity with the living body. When aesthetic appreciation is taken into account, the material is preferably feldspar.

The size and shape of the work 90 in the present invention are substantially equal to, or greater than, the size and shape of the final product that supplements the deficient portion of one or a plurality of teeth, though it varies depending on the machine tool used. A dental prosthesis has a size falling within an ordinary range of a width of 2 to 20 mm. In the case of the prosthesis (inlay, on-lay, crown, etc) of one tooth, the prosthesis preferably has a circular cylindrical shape as shown in Figs. 34 and 35. In the case of the prosthesis for a plurality of teeth (such as a bridge), the prosthesis preferably has a prismatic shape in view of the shaping factor of the block. In such a case, the fitting position of the support portion is preferably at the center of the elongated surface of the prism, but the support portion can be fitted to the minor surface in some cases.

The work support member 91 is made of the same material as that of the work 90. However, since the support member 91 is finally cut and omitted in many cases, its material has higher cuttability. For example, feldspar or alumina is used preferably. The machining tool used varies with the material to be machined. Therefore, feldspar, that is the same material as the material of the work 90, is preferably used because the same machine tool can process the work 90 and the support member 91.

Metal materials for the support member 91 are titanium, titanium compounds and other metal materials for dental remedy in the same way as the work 90.

Its length depends on the machining space of the machine tool, and its range is adjusted suitably. Generally, when the length is great, the support member 91 is likely to be broken and to invite the problem of durability. When the length is short, the cutting tool and the holding portion are likely to come into mutual contact. Therefore, the range of the length is preferably 1 mm to 10 mm.

The area of the contact surface between the support member 91 and the work 90 cannot be much decreased due to the necessity of supporting the work 90. When the area is too great, cutting for removal becomes necessary. For these reasons, the area of the contact surface is preferably 1 to 20 mm with respect to the size of the work 90.

The work 90 and the work support member 91 are preferably made of the same material. In this case, they are formed integrally with each other from the aspects of durability at the time of cutting and of reduction of the number of production steps. They may also be coupled by using an adhesive.

The holding member 92 holds the work support member 91 by means of its holding portion stopper 93. The holding portion stopper 93 is shaped so that its section is equal to the sectional area of the work support member 91. For, the portion of the support member 91 to be cut must be short as described above and moreover, an escape width of the cutting tool is necessary to a certain extent. Therefore, when the escape width of the cutting tool is greater than the support member 91 or when a cutting tool greater than the support member 91 is used, the cutting tool should not strike the holding portion stopper 92. The size is adjusted suitably within this range.

This embodiment represents the combination of the work 90 with the work portion support member 91. There is also the case where this support member 91 is connected and fitted to the model (11 in Fig. 1) for obtaining the data as the basis when machining is conducted. There is another case where the support member 91 is not fitted but is added to the data obtained in advance by measuring the model. In such a case, the shape itself of the model is preferably simple. From this point, too, the cylindrical shape is suitable in the case of the prosthesis for one tooth (inlay, on-lay, crown, etc).

The support member 91 plays an auxiliary role when the work 90 is machined. In addition, there is the case where a part of this support member 91 is used as the work. In other words, when the final shape after machining of the work 90 has a protruding portion, the support member 91 can be the protruding portion.

When the work 90 is larger or is a dental prosthesis used for a plurality of teeth, one support member cannot sufficiently support the work. In such a case, a plurality of support members may be connected to the work 90. Furthermore, when the prosthesis has a complicated shape such that a large machining area must be secured, a plurality of support members may be connected to the work within the size that decreases the contact surface with the work. In this case, a plurality of holding members must be connected to a plurality of support members. Therefore, the machine tool side, too, needs to have a construction having portions to be connected to all the holding members. However, such portions need not always be connected to all of the holding members but may be connected to one holding portion so long as the machine tool can be connected at least in such a fashion as to be capable of machining.

If a plurality of support portions can be converged to one support portion even when the machining portion is connected to a plurality of support portions, connection with the machine tool can be achieved at one connection portion by connecting the converged portion to one holding portion. In this way, machining can be conducted without exchanging the complicated machine tool for the prosthesis as a whole or a part of the machine tool.

The machine tool used in this embodiment is based on the NC machine tool for machining the mold, or the like. This embodiment conducts machining of the crown of the dental prosthesis by using this machine tool. However, the NC machine tool for machining the molds in general is large in scale, and its machining accuracy is not suitable for medical or dental materials.

In this embodiment, the block for a dental prosthesis shown in Fig. 34 is prepared. The work 90 is machined into a circular cylindrical shape for a crown, and the circular cylindrical support member 91 is fitted to the curved portion. The material of the work 90 and the machining portion support member 91 is porcelain, and these members 90 and 91 are of a unitary type. The holding member 92 and the holding portion stopper 93 for fitting the work to the machine tool are of a unitary type, and use aluminum as the material. The holding member 92 is the portion that is clamped by the machine tool. The holding portion stopper 93 is directed to stipulate the portion that is fitted into the fixing portion of the machine tool and to conduct positioning of the work 90. The surface of the machining portion support member 91 is bonded to that of the holding portion stopper 93 by using an ordinary acrylic adhesive. The drawings obtained by projection from various directions are illustrated below.

Fig. 35A is a front view of a dental prosthesis block, Fig. 35B is a left-hand side view, Fig. 35C is a plan view, Fig. 35D is a rear view, Fig. 35E is a right-hand side view and Fig. 35F is a bottom view.

The machine tool 3 measures the shape and size of the crown and the personal computer 2 processes the measurement data to machining data. Contour line machining is then applied onto the circle into the crown shape by the diamond bar tool 19.

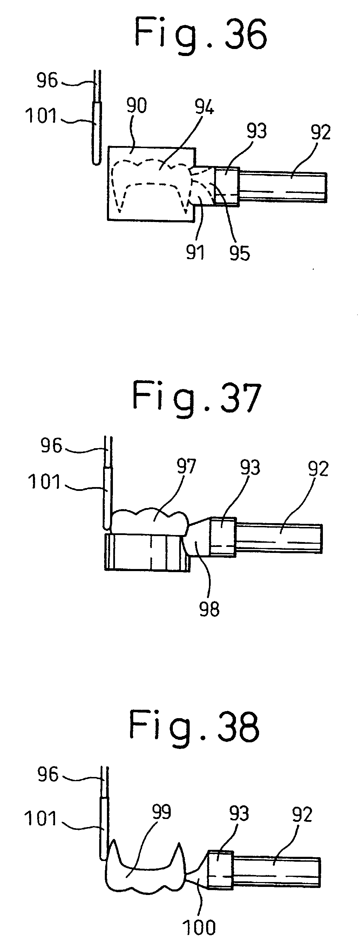

Fig. 36 shows the condition where the interconnection portion between the crown shape data 94 and the holding portion stopper 93 is brought into conformity with the machining block. Fig. 37 shows contour line machining of the occlusal surface on the circle. After machining of the occlusal surface is completed, the work is inverted by 180°. Fig. 38 shows the condition where the work 90 is inverted by 180° and the anchor tooth surface is machined. After the work is machined into the crown shape, the block is removed from the machine tool 3. Thereafter, the crown 99 is cut off manually, and is polished and finished. The cutting edge length 101 of the diamond bar tool 96 has been brought into conformity with the interconnection portion 100, but it may be merely set to the anchor tooth surface of the crown 99. In this case, the cutting edge length 101 becomes short, and deviation and deflection become small. The embodiment given above explains further concretely the present invention, but the present invention is in no way limited to this embodiment.

When the machining portion support portion is added to the machining block for the dental prosthesis, the machining quantity of the interconnection portion between the machining portion and the holding portion can be decreased. Consequently, the present invention can shorten the machining time, can extend life of the cutting tool and can improve machining accuracy.

### LIST OF REFERENCE NUMERALS

- 1: CRT display
- 2: personal computer main body
- 3: machine tool
- 4: three-dimensional shape measuring area
- 5: three-dimensional machining area
- 6: three-dimensional shape measuring probe
- 7: spindle motor
- 8: contact device
- 9: jig
- 10: jig
- 11: measurement model
- 12: measurement model rib
- 13: cable
- 14: cable
- 15: work
- 16: rib
- 17: outer shape of measurement model
- 18: orbit of tool
- 19: tool
- 20: work
- 21: contour line of anchor tooth surface side (inside surface)
- 22: work
- 23: outer shape of measurement model
- 24: orbit of tool
- 25: work
- 26: outer shape of measurement model
- 27: orbit of tool
- 28: work
- 29: outer shape of measurement model
- 30: orbit of tool
- 31: grinding tool
- 32: injector nozzle
- 33: rib stopper
- 34: anchor tooth gypsum model
- 35: portion trimmed into overhung
- 36: margin line of anchor tooth gypsum model
- 37: wax model
- 38: most projecting portion
- 39: measurement data of wax model surface
- 40: fixed adaptor
- 41: fixed adaptor rib
- 42: measurement data of surface of anchor tooth gypsum model
- 43: Z-axis lower limit line of contact device
- 44: anchor tooth shape data
- 45: data offsetting anchor tooth shape data
- 46: line having certain height from margin line
- 47: occlusal surface shape data
- 48: data obtained by surface-shaping from margin line to most projecting portion
- 49: inner surface shape data
- 50: crown shape data
- 51: rib shape data
- 52: coping inner surface shape data
- 53: coping outer surface shape data
- 54: coping shape data
- 55: rib data for machining
- 56: titanium coping
- 57: porcelain material
- 58: overhanging, unnecessary three-dimensional shape data
- 62: anchor tooth shaped
- 63: adjacent tooth on near side
- 64: adjacent tooth on far side
- 65: counter tooth
- 66: setting resin
- 67: resin to which tooth shape is transferred
- 68: tooth shaped transferred resin after trimming
- 69: mold of adjacent tooth on near side after trimming
- 70: mold of adjacent tooth on far side after trimming
- 71: rib to be disposed in three-dimensional measuring area
- 72: measurement data of transfer resin
- 72a: anchor tooth model measurement data
- 73: adjacent tooth data on near side
- 74: adjacent tooth data on far side
- 75: basic shape data
- 76: optimized basic shape data
- 77: crown shape data
- 78: anchor tooth model measurement data after male-female conversion
- 79: ceramic block after machining
- 80: rib for fitting ceramic block
- 81: ceramic crown after removal of rib and machining
- 82: margin line portion
- 83: overhang portion (undercut portion)
- 84: most projecting portion line of adjacent tooth on near side
- 85: most projecting portion line of adjacent tooth on far side
- 86: most projecting portion line of adjacent tooth on near side of transferred resin
- 87: most projecting portion line of adjacent tooth on far side of transferred resin
- 90: machining portion of machining block
- 91: machining portion support portion of machining block
- 92: holding portion of machining block
- 93: holding portion stopper of machining block
- 94: crown shape data
- 95: interconnection portion data
- 96: diamond bar
- 97: crown occlusal surface after machining
- 98: interconnection portion when crown occlusal surface is machined
- 99: crown after machining
- 100: interconnection portion after machining
- 101: cutting edge of diamond bar (diamond electrodeposition portion)

## Claims

1. A machining method comprising profiling a work using a side surface portion of a machining tool to shape said work to an object shape or to a shape approximate to said object shape.

2. A machining method according to claim 1, wherein a surface obtained by rotating or moving said work or said machining tool is profiled.

3. A method, and an apparatus therefor, wherein an article to be measured and a work to be machined exist coaxially and are measured or machined, or said article and said work exist coaxially and are measured or machined by being rotated or moved.

4. A method of preparing three-dimensional shape data comprising deleting overhang data from measurement data obtained by three-dimensional shape measurement, executing an interpolation process for the deleted data on the basis of necessary three-dimensional shape data, and producing three-dimensional shape data.

5. A method of preparing three-dimensional shape data comprising producing three-dimensional shape data from a single set or a plurality of sets of data on the basis of data obtained by said method of claim 4.

6. A method of preparing three-dimensional shape data according to claim 5, wherein deformation, conversion, surface configuration or offset processing is executed.

7. A method of producing a dental prosthesis including the steps of obtaining the shape of a prosthetic portion as information; processing said information and converting it to shape data of said prosthetic portion; and machining a block on the basis of said shape information; characterized in that a mold or an impression is acquired from inside an oral cavity or from a model, and the shape of said prosthetic portion is acquired by measuring the surface shape of said mold or said impression.

8. A method of producing a dental prosthesis according to claim 7, wherein said machining information is acquired from data of the whole part or a part obtained by measuring the surface shape of said mold or said impression in combination with tooth basic shape data generated in advance as data, or from data obtained by conducting deformation, conversion, movement, enlargement/reduction, rotation and offset.

9. A method for producing a dental prosthesis, acquiring information for machining from measurement data obtained by measuring a surface shape of a mold or an impression and measurement data of the whole part, or a part, of the shape of an anchor tooth model produced from said mold or said impression.

10. A method for producing a dental prosthesis, producing a dental prosthesis from measurement data obtained by measuring a surface shape of a mold or an impression and the whole part or a part of shape measurement data of a anchor tooth model in combination with basic shape data of a tooth, or data obtained by deformation, conversion, movement, enlargement/diminution, rotation and offset.

11. A block for a dental prosthesis comprising a machining portion at which a work is machined for shaping a prosthesis, a holding portion for holding, fitting, fixing or bonding said machining portion to a machine tool, and a support portion made mainly of a material capable of being machined by said machine tool and interposed between said machining portion and said holding portion.

12. A block for a dental prosthesis according to claim 11, wherein the size of a contact surface of said support portion is substantially equal to that of said holding portion.
